# EUROPEAN PATENT APPLICATION

(11) **EP 4 349 918 A1**
(43) Date of publication of application: **10.04.2024**
(21) Application number: 22200095.2
(22) Date of filing: 06.10.2022
(51) Int. Cl.: C08L 95/00, C08L 97/02

(54) **METHOD FOR PRODUCING BATCH MATERIAL COMPRISING RENEWABLE RAW MATERIALS AND BITUMEN FOR ACOUSTIC DAMPING COMPOSITIONS**

(71) Applicant: Sika Technology AG, 6340 Baar (CH)
(72) Inventor: KORNACKI, Zdislaw, 61130 Nidderau (DE); WITT, Robert, 63110 Rodgau (DE); HARDT, Christian, 65451 Kelsterbach (DE); WROBLEWSKA-MAREK, Agnieszka, 63457 Hanau (DE); SCHWAB, Frederick, 60594 Frankfurt (DE)
(74) Representative: Sika Patent Attorneys

(57) **Abstract**

The invention is directed to a method of mixing at least one bitumen component **B** and at least one solid particulate cellulose-containing filler **FW** for a mixing time of ≥ 10 min at a mixing temperature of 100 - 180 °C, wherein the weight ratio of solid particulate cellulose-contain filler **FW** to bitumen **B (FW** / **B)** is between 6 : 1 and 1 : 1. The mixture has a low potential for absorbing humidity during storage and safeguards the ability of the cellulose-containing particles to contribute to a high loss factor in an acoustic damping material.

The invention is also directed to use of the mixture in an acoustic damping material for damping of vibrations and noise in transportation vehicles and white goods, to a vibration and noise damping element comprising a damping layer composed of the acoustic damping material, to a method for applying a vibration and noise damping element to a noise emitting surface of a substrate, and to a vibration damped system comprising a substrate and the vibration and noise damping element bonded to a noise emitting surface of the substrate.

## Description

### Technical field

The present invention relates to compositions used for damping of vibrations and noise in mechanical structures of manufactured articles. In particular, the present invention relates to the production of compositions comprising renewable raw materials, which are suitable for use in damping of vibrations of components and structures contained in articles of automotive industry, home appliances, and general industry.

### Background of the invention

Acoustic damping materials are widely used in automotive, home appliance and general industries for reducing of undesired vibrations, structure borne noise, and air borne noise. For example, in automotive vehicles, it is desirable to prevent transfer of vibrations generated by the motors, pumps, gears and other dynamic force generators through the body of the vehicle into the passenger compartment. Structure borne noise is produced when the vibrations generated by a dynamic force generator are transmitted through a supporting structure, typically a frame or other hollow structure, to a noise emitting surface, such as a metallic or plastic panel, which transforms the mechanical vibrations into sound waves. Structure borne noise and vibrations in general can be effectively reduced by application of vibration damping materials directly to the structures and surfaces of components subjected to vibrational disturbances, such as surfaces of vehicle panels, floors, and shells of machines, washers, and dryers.

Acoustic damping materials used for damping of vibrations of panels and plates are commonly provided in form of pre-formed single- and multi-layer damping elements or as liquid compositions, which are applied directly on surface of a substrate. Damping materials designed for damping of vibrations and noise in hollow structures such as cavities are usually provided in form of cavity filler inserts comprising an expandable composition and one or more attaching members, which are capable of holding the cavity filler insert in a desired position within the hollow structure.

Pre-formed single- and multiple-layer damping elements comprise a damping layer, which is in direct contact with a surface of the substrate to be damped against vibrational disturbances. The damping layer is capable of dissipating kinetic energy of the vibrating surface into heat energy through extension and compression of the material of the damping layer. Pre-formed single- and multiple-layer damping elements often comprise a layer of an adhesive composition, such as a pressure sensitive adhesive (PSA) or a hot-melt adhesive, to enable bonding of the damping layer to a surface of a substrate, such as a panel or floor of an automotive vehicle. Liquid applied damping systems are typically thermally drying, gelling, or reactive compositions, which are applied on the surface of the substrate in liquid state, for example by spraying.

Acoustic damping materials used for damping of vibrations of panels and plates can also be provided in form of constrained layer damping elements, which contain damping layer and a stiff outer layer that "constraints" the damping layer thereby sandwiching it between the stiff outer layer and the surface of the substrate to be damped. The stiffness of the outer layer is generally a factor of ten times higher than the stiffness of the layer of damping material. Commonly used materials for the outer top layer include, for example, aluminum and fiber glass fabrics. Constrained layer dampers are typically more effective in damping of undesired vibrations than single-layer damping elements but they are also more expensive to produce.

Cavity filler inserts are used for dampening of air borne noise within the cavity of a hollow structure component and to prevent vibrations from being transmitted through the walls of the cavity. A cavity filler insert typically consists of a damping material and at least one attachment member capable of holding the cavity filler insert in a desired position within the hollow structure. The damping material of the cavity filler insert is typically formulated as an expandable composition, which upon activation, such as at elevated temperature, expands and forms a seal around the interior surface of the wall of the cavity. Expandable damping materials suitable for damping of air borne noise within a cavity are commonly referred to as "acoustic baffles".

Commonly used materials for damping layers include highly filled compositions comprising bitumen, elastomers, or thermoplastic polymers and varying amount of additives, such as plasticizers, processing aids, rheology modifiers, and drying agents. Fillers are added to these compositions to meet different design goals. Some of the fillers are used to improve the acoustic damping properties, whereas other fillers are used to reduce the density of the material or to replace more expensive materials in order to reduce costs of raw materials. Typical fillers used in acoustic damping materials include, in particular, mineral fillers. Light weight mineral fillers, such as hollow ceramic spheres and hollow glass spheres have been widely used to reduce the density of the acoustic damping material and eventually to reduce the weight of the acoustic damping element. WO 2021/105129 describes an acoustic damping material comprising a bitumen component and a solid particulate cellulose-containing filler. Using cellulose-containing fillers has the advantage of using renewable raw materials that exhibit similar or improved damping properties. Using solid particulate cellulose-containing fillers in the production process of said acoustic damping material brings the disadvantage of extensive dust production when storing, handling and mixing the cellulose-containing fillers. Further, the cellulose-containing fillers are prone to absorption of humidity during storage and handling which reduces the quality of the acoustic damping material.

There is thus a need for a production method for acoustic damping material containing solid particulate cellulose-containing fillers wherein the handling of said filler can be improved without reducing the quality and benefits of the filler in the final acoustic damping material.

### Summary of the invention

The object of the present invention is to provide an improved production process for acoustic damping material containing solid particulate cellulose-containing fillers.

The subject of the present invention is a method of mixing as defined in claim 1.

It was surprisingly found that mixing solid cellulose-containing particles, such as wood particles, with bitumen in a certain weight ratio at a certain temperature range, significantly reduces the potential for absorbing humidity during storage and safeguards the ability of the cellulose-containing particles to contribute to a high loss factor in an acoustic damping material.

Other subjects of the present invention are presented in other independent claims. Preferred aspects of the invention are presented in the dependent claims.

### Brief description of the Drawings

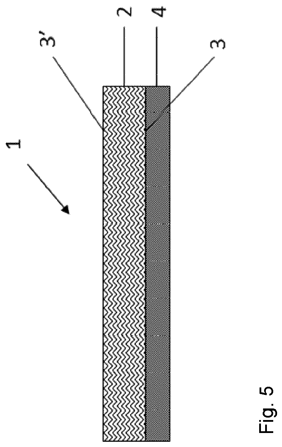

Fig. 5 shows a cross-section of a vibration and noise damping element (1) comprising a damping layer (2) having a first surface (3) and a second surface (3'), and an adhesive layer (4) covering the first surface (3) of the damping layer (2).

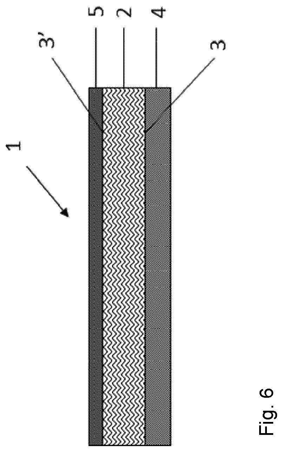

Fig. 6 shows a cross-section of a vibration and noise damping element (1) comprising a damping layer (2) having a first (3) surface and a second surface (3'), an adhesive layer (4) covering the first surface (3) of the damping layer (2), and a constraining layer (5) covering the second surface (3') of the damping layer (2).

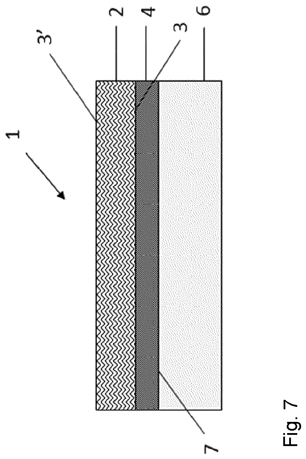

Fig. 7 shows a cross-section of a vibration damped system comprising a substrate (6) having a noise emitting surface (7) and a vibration and noise damping element (1) comprising a damping layer (2) and an adhesive layer (4), wherein the first surface (3) of the damping layer (2) is adhesively bonded to the noise emitting surface (7) via the adhesive layer (4).

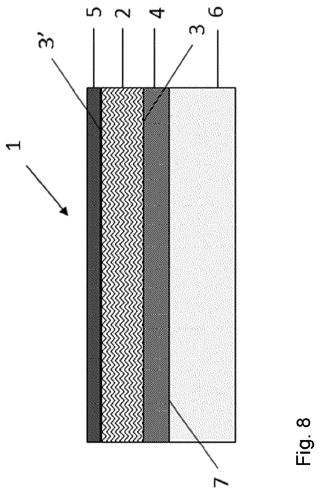

Fig. 8 shows a cross-section of a vibration damped system comprising a substrate (6) having a noise emitting surface (7) and a vibration and noise damping element (1) comprising a damping layer (2), an adhesive layer (4), and a constraining layer (5), wherein the first surface (3) of the damping layer (2) is adhesively bonded to the noise emitting surface (7) via the adhesive layer (4) and wherein the damping layer (2) is sandwiched between the adhesive layer (4) and the constraining layer (5).

### Detailed description of the invention

The subject of the present invention is a method of mixing:
- at least one bitumen component **B** and
- at least one solid particulate cellulose-containing filler **FW,** for a mixing time of > 10 min at a mixing temperature of 100 - 180 °C. The weight ratio of solid particulate cellulose-contain filler **FW** to bitumen **B (FW / B)** is between 6 : 1 and 1 : 1, preferably 5 : 1 and 3 : 1.

The term "bitumen" designates in the present disclosure blends of heavy hydrocarbons, having a solid consistency at room temperature. These are normally obtained as vacuum residue from refinery processes, which can be distillation (topping or vacuum) and/or conversion processes, such as thermal cracking and visbreaking, of suitable crude oils. Furthermore, the term "bitumen" also designates natural and synthetic bitumen as well as bituminous materials obtained from the extraction of tars and bituminous sands.

The bitumen component **B** can comprise one of more different types of bitumen materials, such as penetration grade (distillation) bitumen, air-rectified (semi-blown) bitumen, and hard grade bitumen.

The term "penetration grade bitumen" refers here to bitumen obtained from fractional distillation of crude oil. A heavy fraction composed of high molecular weight hydrocarbons, also known as long residue, which is obtained after removal of gasoline, kerosene, and gas oil fractions, is first distilled in a vacuum distillation column to produce more gas oil, distillates, and a short residue.

The short residue is then used as a feed stock for producing different grades of bitumen classified by their penetration index, typically defined by a PEN value, which is the distance in tenth millimeters (dmm) that a needle penetrates the bitumen under a standard test method. Penetration grade bitumen are characterized by penetration and softening point.

Preferably, bitumen component **B** has a needle penetration, determined according to DIN EN 1426:2015 of 50 - 70 (dmm) or 70 - 100 (dmm), preferably 70 - 100 (dmm). These values were found to have the best miscibility with the solid particulate cellulose-containing filler **FW** and result in premix that is best suited for the later use in an acoustic damping material.

It is further preferred if the bitumen component **B** has a softening point, determined according to DIN EN 1427:2015 of 43 - 54 °C, preferably 43 - 51 °C. These values were found to have the best miscibility with the solid particulate cellulose-containing filler **FW** and result in premix that is best suited for the later use in an acoustic damping material.

The term "air-rectified bitumen" or "air-refined bitumen" refers in the present disclosure to a bitumen that has been subjected to mild oxidation with the goal of producing a bitumen that meets paving-grade bitumen specifications. The term "hard grade bitumen" refers in the present disclosure to bitumen produced using extended vacuum distillation with some air rectification from propane-precipitated bitumen. Hard bitumen typically has low penetration values and high softening-points.

The method of mixing uses at least one solid particulate cellulose-containing filler **FW.** The term "solid particulate filler" designates in the present document fillers that are present in the acoustic damping material in form of solid particles. Preferably, the at least one solid particulate cellulose-containing filler **FW** is composed of particles of cellulose-containing material.

The at least one solid particulate cellulose containing filler **FW** preferably has a median particle width (X_{c,min}) D₅₀ in the range of 100 - 1000 µm, preferably 115 - 850 µm, more preferably 135 - 750 µm, even more preferably 150 - 650 µm, still more preferably 165 - 550 µm, most preferably 175 - 450 µm. The term "median particle width D₅₀" refers in the present disclosure to a particle width below which 50 % of all particles by volume have a smaller width than the D₅₀ value. The term "particle width" refers in the present disclosure to the diameter of a particle, which is the shortest chord (X_{c,min}) of a measured set of maximum chords (X_{c}) of a particle's projection. The particle size distribution is preferably measured using dynamic image analysis method conducted according to ISO 13322-2:2006 standard. For determination of the particle size distribution, the particles are preferably dispersed in air, preferably using air pressure dispersion method. The measurements can be conducted using any type of dynamic image analysis apparatus, such as a Camsizer XT device (trademark of Retsch Technology GmbH).

According to a preferred embodiment, the particles of the at least one solid particulate cellulose-containing filler **FW** have an aspect ratio of not more than 10, preferably not more than 7.5, more preferably not more than 5. Preferably, the aspect ratio of the particles of the at least one solid particulate cellulose-containing filler **FW** is in the range of 1 - 10, preferably 1.25 - 7.5, more preferably 1.5 - 7.5, even more preferably 1.5 - 5, still more preferably 1.5 - 4.5.

The term "aspect ratio" of a particle refers in the present disclosure to the value obtained by dividing the length of the particle (L) by the thickness (T) of the particle. The "length of a particle" refers in the present disclosure to the maximum Feret diameter (X_{Fe,max}), i.e. the longest Feret diameter out of the measured set of Feret diameters. The term "Feret diameter" refers in the present disclosure to the distance between two tangents on opposite sides of the particle, parallel to some fixed direction and perpendicular to the measurement direction. The "thickness of a particle" refers in the present disclosure to the minimum Feret diameter (X_{Fe,min}), i.e. the shortest Feret diameter out of the measured set of Feret diameters. The aspect ratio is, therefore, calculated as the ratio of X_{Fe,max} and X_{Fe,min}.

The aspect ratio of a particle can be determined by measuring the length and thickness of the particle using any suitable measurement technique, preferably by using dynamic image analysis method conducted according to ISO 13322-2:2006 standard, and calculating the aspect ratio from the measured dimensions of the particle as described above. The dimensions of particles can be measured with a dry dispersion method, where the particles are dispersed in air, preferably by using air pressure dispersion method. The measurements can be conducted using any type of dynamic image analysis apparatus, such as a Camsizer XT device (trademark of Retsch Technology GmbH).

According to one or more embodiments, the at least one solid particulate cellulose-containing filler **FW** has a true particle density in the range of 0.25 - 1.5 g/cm³, preferably 0.30 - 1.25 g/cm³, more preferably 0.35 - 1.0 g/cm³, even more preferably 0.40 - 1.0 g/cm³, still more preferably 0.45 - 0.85 g/cm³, most preferably 0.50 - 0.75 g/cm³. The term "true particle density" refers in the present disclosure to the real density of the particles that make up the particulate material. In contrast the term "bulk density" refers to the mass of the particulate material in a unit volume (including voids between particles).

According to one or more embodiments, the at least one solid particulate cellulose-containing filler **FW** contains at least 25 wt.-%, preferably at least 35 wt.-%, more preferably at least 40 wt.-% of cellulose.

Preferably, the at least one solid particulate cellulose-containing filler **FW** is composed of wood particles. The term "wood particle" refers to particles composed of wood fibers. The length dimension of a wood particle is typically orientated parallel to the grain structure of the wood particle, i.e. parallel to the orientation of the long axis of the dominant fibers in the wood particle.

Preferably, the at least one solid particulate cellulose-containing filler **FW** include, for example, all types of soft wood and hard wood particles, in particular hard wood particles.

The term "softwood" refers to wood from conifers, i.e. wood from needle-bearing trees from the order Pinales. Softwood-producing trees include, for example, pine, spruce, cedar, fir, larch, douglas-fir, hemlock, cypress, redwood, and yew. Conversely, the term "hardwood" refers to wood from broad-leaved or angiosperm trees, such as eucalyptus, maple, birch, beech, aspen, and the like. Softwoods contain two types of cells, longitudinal wood fibers (or tracheids) and transverse ray cells whereas hardwood trees contain pores or vessels. In softwood, water transport within the tree is via the tracheids rather than the pores of hardwoods.

Preferably, the at least one solid particulate cellulose-containing filler **FW** comprises or is composed of hardwood particles, preferably selected from the group consisting of wood particles of eucalyptus, maple, birch, beech, and aspen.

Preferably, the at least one solid particulate cellulose-containing filler **FW** comprises at least 15 wt.-%, preferably at least 35 wt.-%, more preferably at least 50 wt.-%, even more preferably at least 75 wt.-%, still more preferably at least 85 wt.-%, most preferably at least 95 wt.-%, of hardwood particles, preferably selected from the group consisting of wood particles of eucalyptus, maple, birch, beech, and aspen. This is advantageous with respect to obtaining a high loss factor.

The mixing of the at least one bitumen component **B** and the at least one solid particulate cellulose-containing filler **FW** takes place for a mixing time of ≥ 10 min at a mixing temperature of 100 - 180 °C.

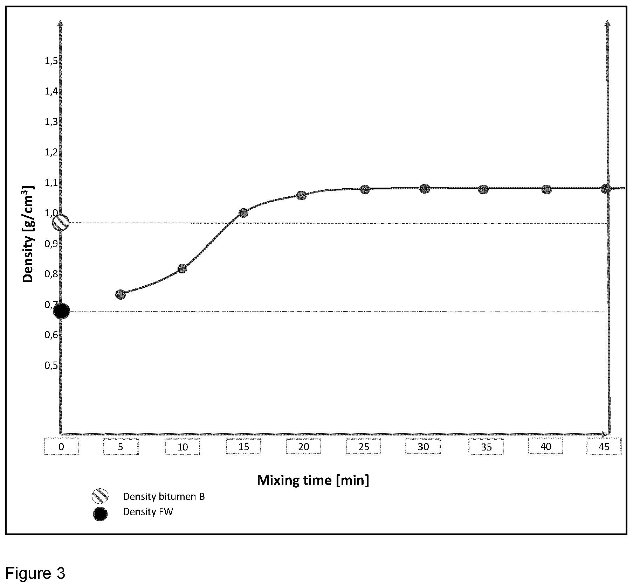

A mixing time of less than 10 min does not provide sufficient saturation and wetting of the solid particulate cellulose-contain filler **FW** with the bitumen **B.** This is for example seen in figure 3.

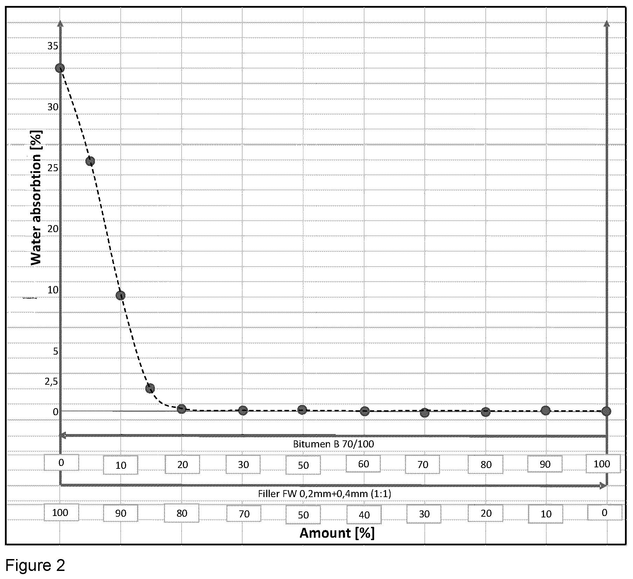

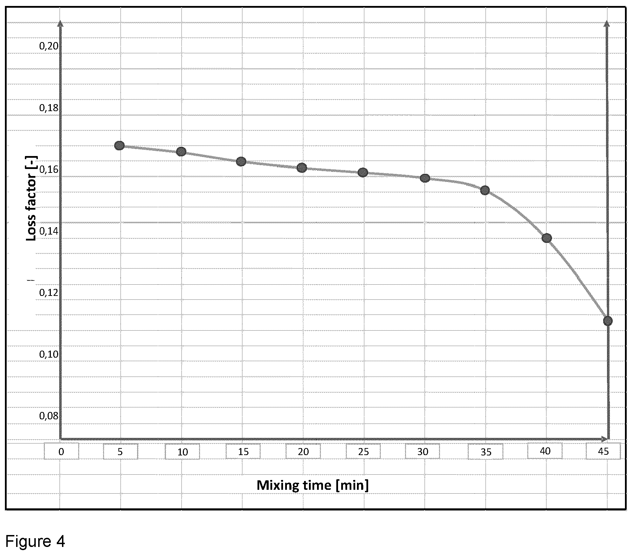

Preferably, the mixing time is between 10 - 45 min, preferably 15 - 40 min, more preferably 20 - 35 min. Said mixing time is advantageous with respect to providing sufficient saturation and wetting of the solid particulate cellulose-contain filler **FW** with the bitumen **B** and obtaining a high loss factor. This can be seen, for example, in figure 2 and figure 4.

A mixing temperature of less than 100 °C has the disadvantage that wetting of the solid particulate cellulose-contain filler **FW** with the bitumen **B** is not sufficient. A mixing temperature of more than 180 °C leads to a reduction of the loss factor obtained by the mixture.

Preferably, the mixing temperature is between 130 - 175 °C, 145 - 175 °C, preferably 155 - 165 °C. Said temperature range is advantageous with respect to sufficient wetting of the solid particulate cellulose-contain filler **FW** with the bitumen **B** and a high loss factor obtained by the mixture.

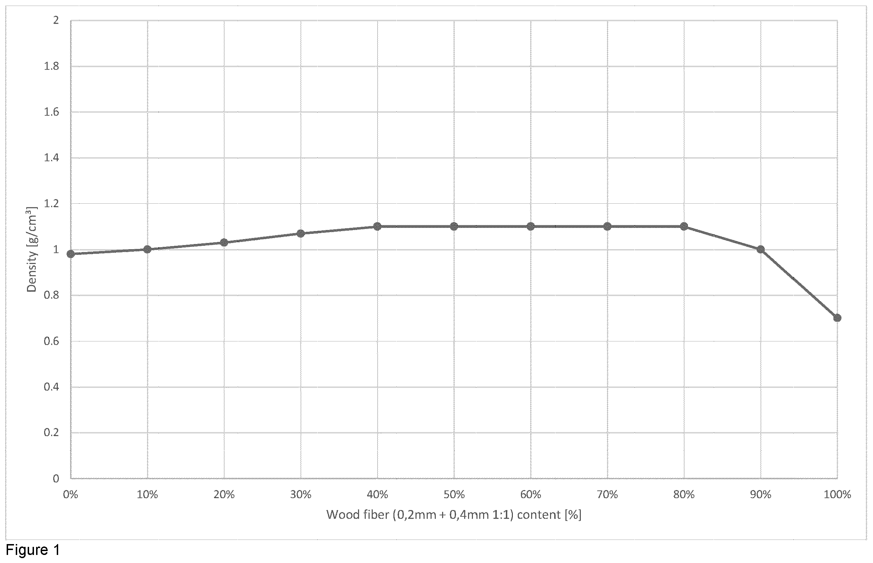

A weight ratio of solid particulate cellulose-contain filler **FW** to bitumen **B (FW** / **B)** is more than 6 : 1 does not provide sufficient saturation and wetting of the solid particulate cellulose-contain filler **FW** with the bitumen **B.** This is for example seen in figure 1.

A weight ratio of solid particulate cellulose-contain filler **FW** to bitumen **B (FW / B)** is less than 1 : 1 has the disadvantage of not including enough particulate cellulose-contain filler **FW** into the bitumen **B** so that the mixture can be used to significantly reduce the loss factor in an acoustic damping material

It is preferred if the weight ratio of the at least one solid particulate cellulose-contain filler **FW** to bitumen **B (FW / B)** is between 5 : 1 and 3 : 1, preferably 4.5 : 1 and 3.5 : 1. Said weight ratio is advantageous with respect to sufficient saturation and wetting of the solid particulate cellulose-contain filler **FW** with the bitumen **B** and a homogenous distribution of the solid particulate cellulose-contain filler **FW.** This is for example seen in figure 1.

Any conventional type of a mixing apparatus can be used for mixing of the at least one bitumen component **B** and the at least one solid particulate cellulose-containing filler **FW** with each other.

Preferably, the mixing step is conducted as a batch process using a conventional batch-type mixer, preferably selected from the list consisting of planetary mixer and kneading mixer, preferably kneading mixer, more preferably double arm kneading mixer, also called sigma mixer.

It is especially preferred if the mixing is conducted with a kneading mixer, preferably a double arm kneading mixer, with a mixing rate of 25 - 60 rounds per minute, preferably 30 - 50 rounds per minute.

The obtained mixture is preferably cooled to a temperature below 35 °C, preferably below 30 °C, and preferably stored, preferably stored for longer than 1 week at said temperature.

The cooled mixed mixture is storage stable at normal storage conditions. The term "storage stable" refers in the present disclosure to materials, which can be stored at specified storage conditions for long periods of time, such as at least one month, in particular at least 3 months, without any significant changes in the application properties of the material. The "typical storage conditions" refer to temperatures below 35°C, in particular below 30°C.

Preferably, the mixture contains less than 10 weight-%, preferably less than 5 weight-%, more preferably less than 2 weight-%, based on the total weight of the mixture obtained in the method, of components other than the at least one bitumen component **B** and the at least one solid particulate cellulose-containing filler **FW** and optionally at least one solid particulate mineral filler **FM,** more preferably of components other than the at least one bitumen component **B** and the at least one solid particulate cellulose-containing filler **FW.**

The obtained mixture is especially suited for the use as a premix for later use, e.g. after a storage period, as a component in a composition, preferably an acoustic damping material.

In a preferred embodiment of the method, after the mixing, preferably after an additional storage period after the mixing;
- at least one thermoplastic polymer **TP,**
- optionally at least one bitumen component **B1,**
- optionally at least one hydrocarbon resin **HR,**
- optionally at least one wax **W,**
- optionally at least one plasticizer **PL,** and
- optionally at least one solid particulate mineral filler **FM,**
is added to the mixture of the at least one bitumen component **B** and the at least one solid particulate cellulose-containing filler **FW** to obtain an acoustic damping material.

Preferably, the amount of the mixture of the at least one bitumen component **B** and the at least one solid particulate cellulose-containing filler **FW** is 1 - 30 wt.-%, preferably 3 - 25 wt.-%, more preferably 5 - 20 wt.-%, based on the total weight of the acoustic damping material.

The above-mentioned thermoplastic polymer **TP** preferably has the following properties:
- a glass transition temperature (T_{g}) determined by dynamical mechanical analysis (DMA) as the peak of the measured loss modulus (G") curve using an applied frequency of 1 Hz and a strain level of 0.1 % of below 25 °C, preferably below 5 °C, more preferably below 0 °C and/or
- a softening point (Tₛ) determined by Ring and Ball measurement conducted according to DIN EN 1238 standard of above 35 °C, preferably above 45 °C, more preferably above 55 °C, such as in the range of 35 - 250 °C, preferably 45 - 200 °C, more preferably 55 - 180 °C.

The type of the at least one thermoplastic polymer **TP** is not particularly restricted. Various types of thermoplastic polymers, including crystalline, semicrystalline, and amorphous polymers and thermoplastic elastomers are suitable for use as the at least one thermoplastic polymer **TP**. According to one or more embodiments, the at least one thermoplastic polymer **TP** is selected from the group consisting of polyolefin homopolymers and copolymers, copolymers of ethylene with vinyl acetate, and thermoplastic olefin elastomers (TPE-O).

The before-mentioned at least one bitumen component **B1** preferably has a needle penetration, determined according to DIN EN 1426:2015 of 10 - 30 (dmm), preferably 10 - 20 (dmm).

The above-mentioned at least one hydrocarbon resin **HR** preferably include C5 aliphatic resins, mixed C5/C9 aliphatic/aromatic resins, aromatic modified C5 aliphatic resins, cycloaliphatic resins, mixed C5 aliphatic/cycloaliphatic resins, mixed C9 aromatic/cycloaliphatic resins, mixed C5 aliphatic/cycloaliphatic/C9 aromatic resins, aromatic modified cycloaliphatic resins, C9 aromatic resins, as well hydrogenated versions of the aforementioned resins. The notations "C5" and "C9" indicate that the monomers from which the resins are made are predominantly hydrocarbons having 4-6 and 8-10 carbon atoms, respectively. The term "hydrogenated" includes fully, substantially and at least partially hydrogenated resins. Partially hydrogenated resins may have a hydrogenation level, for example, of 50 %, 70 %, or 90 %.

The above-mentioned at least one wax **W** preferably has
- a softening point determined by using the Ring and Ball method as defined in DIN EN 1238 standard in the range of 75 - 180 °C, preferably 80 - 160 °C, more preferably 85 - 140 °C and/or
- a melt viscosity at a temperature of 170 °C determined according to DIN 53019 standard in the range of 10 - 10000 mPa·s, preferably 100 to 5000 mPa·s, more preferably 500 - 3500 mPa·s. The melt viscosity can be determined by busing a rotational viscometer at 5 revolutions per minute, for example by using a Brookfield DV-2 Thermosel viscometer with a spindle No. 27.

According to one or more embodiments, the at least one wax is a polyolefin wax. The term "polyolefin wax" designates in the present document low molecular weight polymers of linear or branched α-olefins having from 2 to 30 carbon atoms and a number average molecular weight (Mₙ) in the range of 5000 - 25000 g/mol. They include both homopolymers and copolymers of the above mentioned linear or branched α-olefins. Polyolefin waxes can be obtained by thermal decomposition of polyolefin plastics, in particular polyethylene plastic, or by direct polymerization of olefins. Suitable polymerization processes include, for example, free-radical processes, where the olefins, for example, ethylene, are reacted at high pressures and temperatures to give more or less branched waxes and processes, where ethylene and/or higher α-olefins, in particular propylene, are polymerized using metalorganic catalysts, for example Ziegler-Natta or metallocene catalysts, to give unbranched or branched waxes. The polyolefin waxes have generally at least partially crystalline structure.

Preferably, the above-mentioned at least one plasticizer **PL** consists of the at least one process oil **PL1,** preferably selected from the group consisting of mineral oils, synthetic oils, and vegetable oils and/or the at least one plasticizer **PL** consists of the at least one at 25 °C liquid hydrocarbon resin **PL2,** preferably selected from the group consisting of liquid polybutenes and liquid polyisobutylenes (PIB), preferably having a molecular weight (Mₙ) of not more than 5'000 g/mol, more preferably not more than 3'500 g/mol, even more preferably not more than 3'000 g/mol and/or a polydispersity index (Mw/Mn) determined by gel permeation-chromatography (GPC) of not more than 7.5, more preferably not more than 5.0, such as in the range of 0.5 - 5.0, preferably 1.0 - 4.5, more preferably 1.0 - 3.5, even more preferably 1.25 - 2.5.

Preferably, the above-mentioned at least one solid particulate mineral filler **FM** is in form of solid particles, preferably having a d₉₀ particle diameter of not more than 2.5 mm, more preferably not more than 1.5 mm. The term "particle diameter d₉₀" refers in the present disclosure to a particle diameter below which 90 % of all particles by volume have a smaller diameter than the d₉₀ value. The term "particle diameter" refers in the present disclosure to the area-equivalent spherical diameter of a particle (Xₐᵣₑₐ). The particle diameter distribution is preferably measured using dynamic image analysis method conducted according to ISO 13322-2:2006 standard. For determination of the particle diameter distribution, the particles are preferably dispersed in air, preferably using air pressure dispersion method. The measurements can be conducted using any type of dynamic image analysis apparatus, such as a Camsizer XT device (trademark of Retsch Technology GmbH).

It is also preferred that the at least one solid particulate mineral filler **FM** is an inert mineral filler and has a water-solubility of less than 0.1 g/100 g water, more preferably less than 0.05 g/100 g water, even more preferably less than 0.01 g/100 g water, at a temperature of 20 °C. The solubility of a compound in water can be measured as the saturation concentration, where adding more compound does not increase the concentration of the solution, i.e. where the excess amount of the substance begins to precipitate. The term "inert mineral filler" refers in the present disclosure to mineral fillers, which unlike mineral binders, are not reactive, i.e. do not undergo a hydration reaction in the presence of water.

According to one or more embodiments, the at least one solid particulate mineral filler **FM** is selected from the group consisting of calcium carbonate, magnesium carbonate, talc, kaolin, diatomaceous earth, wollastonite, feldspar, montmorillonite, dolomite, silica, cristobalite, iron oxide, iron nickel oxide, strontium ferrite, barium-strontium ferrite, hollow ceramic spheres, hollow glass spheres, hollow organic spheres, glass spheres, mica, barium sulfate, and graphite.

Another aspect of the invention is the use of the above-described mixture for the production of acoustic damping material, preferably for the damping of vibrations and/or noise in transportation vehicles or white goods.

Another subject of the present invention is a vibration and noise damping element (1) comprising:
i) A damping layer (2) having a first and a second surface (3, 3') and
ii) An adhesive layer (4) covering at least a portion of the first surface (3) of the damping layer (2), wherein the damping layer (2) comprises or is composed of the acoustic damping material of the present invention.

A cross-section of the vibration and noise damping element according to the present invention is shown in Figure 5.

According to one or more embodiments, the damping layer is sheet-like element having a first and a second major surfaces defining a thickness there between and a length and width at least 5 times, preferably at least 15 times, more preferably at least 25 times greater than the thickness of the sheet-like element. The term "thickness" refers to a dimension of a sheet-like element that is measured in a plane that is substantially perpendicular to the length and width dimensions of the element. In embodiments, in which the damping layer is sheet-like element, the first and second surfaces of the damping layer correspond to the first and second major surfaces of a sheet-like element.

The damping layer and the adhesive layer are preferably directly connected to each other over their opposing surfaces. The expression "directly connected" is understood to mean in the context of the present invention that no further layer or substance is present between the two layers and that the opposing surfaces of the layers are directly adhered to each other. According to one or more embodiments, the adhesive layer covers at least 65 %, preferably at least 75 %, more preferably at least 85 %, even more preferably at least 90 %, still more preferably at least 95 % of the first surface of the damping layer. According to one or more further embodiments, the adhesive layer covers substantially the entire area of the first surface of the damping layer. The expression "substantially entire area" is understood to mean at least 97.5 %, preferably at least 98.5 %, more preferably at least 99.5 % of the total area.

The adhesive layer preferably comprises a pressure sensitive adhesive or a hot-melt adhesive composition. The term "pressure sensitive adhesive" is understood to include also pressure sensitive hot-melt adhesives (HM-PSA). According to one or more embodiments, the adhesive layer is composed of a pressure sensitive adhesive or of a hot-melt adhesive composition.

Suitable pressure sensitive adhesives to be used in the adhesive layer include compositions based on acrylic polymers, styrene block copolymers, amorphous polyolefins (APO), amorphous poly-α-olefins (APAO), vinyl ether polymers, or elastomers such as, for example, butyl rubber, ethylene vinyl acetate having a high content of vinyl acetate, natural rubber, nitrile rubber, silicone rubber, and ethylene-propylene-diene rubber. In addition to the above mentioned polymers, suitable pressure sensitive adhesive compositions typically comprise one or more additional constituents including, for example, tackifying resins, waxes, and plasticizers as wells as one or more additives such as, for example, UV-light absorption agents, UV- and heat stabilizers, optical brighteners, pigments, dyes, and desiccants.

Hot-melt adhesives are solvent free adhesives, which are solid at room temperature and which are applied to the substrate to be bonded in form of a melt. After cooling the adhesive solidifies and forms an adhesive bond with the substrate through physically and/or chemically occurring bonding. Suitable hot-melt adhesives include, for example, polyolefin-based hot-melt adhesives, in particular those based on amorphous polyolefins (APO) and amorphous poly-alpha-olefins (APAO), thermoplastic copolymer-based hot-melt adhesives, in particular those comprising copolymers ethylene and vinyl acetate (EVA) or polyamide as the main polymer component, and polyurethane-based hot-melt adhesives. In addition to the above mentioned polymers, suitable hot-melt adhesive compositions typically comprise one or more additional constituents including, for example, resins and waxes as well as one or more additives such as, for example, UV-light absorption agents, UV- and heat stabilizers, optical brighteners, pigments, dyes, and desiccants. Suitable hot-melt adhesives to be used in the adhesive layer are disclosed, for example, in WO 2011/023768 A1, WO 2016/139345 A1, and WO 2017/174522 A1.

According to one or more embodiments, the damping layer has a maximum thickness in the range of 0.5 - 15 mm, preferably 1 - 10 mm, more preferably 1.5 - 7.5 mm, even more preferably 1.5 - 5 mm and/or a density in the range of 0.1 - 5 g/cm³, preferably 0.2 - 4.5 g/cm³, more preferably 0.3 - 3 g/cm³, even more preferably 0.3 - 2.5 g/cm³ and/or a mass per unit area of 1 - 5 kg/m², preferably 1 - 4.5 kg/m², more preferably 1.5 - 4.5 kg/m², still more preferably 1.5 - 3.5 kg/m².

According to one or more embodiments, the vibration and noise damping element has a loss factor determined at 200 Hz at temperature of 20 °C using the method as defined in ISO 6721 standard, of at least 0.1, preferably at least 0.15. Such vibration and noise damping elements have been found out to be especially suitable for use in damping of vibrations of components and structures contained in articles of automotive industry and home appliances.

According to one or more embodiments, the vibration and noise damping element further comprises, in addition to the damping layer and the adhesive layer, a constraining layer covering at least a portion of the second surface of the damping layer. The vibration and noise damping element according to these embodiments are generally known as "constrained layer dampers". The damping layer and the constraining layer are directly or indirectly connected to each other over their opposing surfaces, i.e. the damping layer is sandwiched between the adhesive layer and the constraining layer. According to one or more embodiments, the constraining layer covers substantially the entire area of the second surface of the damping layer. A cross-section of a vibration and noise damping element according to these embodiments is shown in Figure 6.

According to one or more embodiments, the constraining layer is a metal sheet, preferably aluminum or steel sheet or a polymeric sheets, preferably glass fiber reinforced polymer sheet. The thickness of the constraining layer is not particularly restricted but the use of constraining layers that are thinner than the damping layer is generally preferred. Preferred thickness also depends on the material of the constraining layer. According to one or more embodiments, the constraining layer has a thickness of 0.05 - 1.5 mm, preferably 0.1 - 1.25 mm, more preferably 0.1 - 1.0 mm. According to one or more embodiments, the constraining layer is a metal sheet having a thickness of 0.05 - 0.5 mm, preferably 0.05 - 0.4 mm. According to one or more further embodiments, the constraining layer is a polymeric sheet having a thickness of 0.1 - 1.2 mm, preferably 0.25 - 1.0 mm.

It is preferred that the constraining layer has an elastic modulus, which is larger than that of the damping layer, such larger by at least the factor 3, preferably at least the factor 5, more preferably at least a factor of 10, wherein the elastic modulus is measured by using the method as defined in ISO 6892-1:2016 standard (for metallic sheets) or as defined in ISO 527-2 standard (for polymeric sheets).

Another subject of the present invention is a method for producing a vibration and noise damping element of the present invention, the method comprising steps of:
i) Providing a damping layer comprising or composed of the acoustic damping material of the present invention and having a first and a second surface,
ii) Applying an adhesive composition on the first surface of the damping layer. Step i) can be conducted any conventional techniques known to a person skilled in the art. For example, the acoustic damping material of the present invention can be first melt-processed in an extruder apparatus and then extruded though an extruder die, preferably a flat die, into a form of a damping layer. Alternatively, the acoustic damping material of the present invention can be processed into a damping layer by using calendering or hot-pressing techniques.

The adhesive composition can be applied on the surface of the damping layer using any conventional techniques, the details of which depend on the type of the adhesive composition. For example, the adhesive composition can be applied on the surface of the sheet by nozzle extrusion, powder dispersion, hot-melt calendaring, or by spray lamination techniques. In case of a hot-melt adhesive composition or a hot-melt pressure sensitive adhesive (HM-PSA) composition, the adhesive composition is first heated to an elevated application temperature above the softening point (Tₛ) of the adhesive before being applied on the surface of the damping layer.

Another subject of the present invention is a method for applying a vibration and noise damping element according to the present invention to a noise emitting surface of a substrate, the method comprising steps of:
I) Providing a vibration and noise damping element according to the present invention,
II) Contacting the outer major surface of the adhesive layer of said vibration and noise damping element with the noise emitting surface and applying sufficient pressure to form an adhesive bond or
II') Heating the adhesive layer of said vibration and noise damping element and/or the substrate and contacting the outer major surface of the adhesive layer with the noise emitting surface and forming an adhesive bond by cooling of the adhesive layer.

The term "outer major surface" of the adhesive layer refers to the major surface of the adhesive layer on the side opposite to the side of the damping layer. The substrate having a noise emitting surface can be any type of shaped article, such as a panel, a sheet, or a film, composed, for example, of metal, plastic, or fiber reinforced plastic. The heating of the adhesive layer and/or the substrate in step II)' can be conducted using any conventional techniques, such as heating in an oven, heating by air stream, or heating with infrared (IR)-radiation.

Still another subject of the present invention is a vibration damped system comprising a substrate (6) having a noise emitting surface (7) and a vibration and noise damping element (1) according to the present invention, wherein least a portion of the first surface (3) of the damping layer (2) is adhesively bonded to the noise emitting surface (7) via the adhesive layer (4). A cross-section of a vibration damped system is shown in Figure 7.

According to one or more embodiments, the vibration and noise damping element (1) is a constrained damping element comprising a constraining layer (5), wherein the damping layer (2) is sandwiched between the adhesive layer (4) and a constraining layer (5). A cross-section of a vibration damped system according to these embodiments is shown in Figure 8.

According to one or more embodiments, the substrate having the noise emitting surface is part of a structure of an automotive vehicle or a white good.

### Examples

The followings products shown in Table 1 were used in the examples.

**Table 1**

| | |
|---|---|
| **B** | Mixture of bitumen, needle penetration (DIN EN 1426:2015) 70 - 100 [1/10 mm], softening point (DIN EN 1427:2015) = 43 - 51 °C |
| **FW1** | Hard wood particles, particle size width 170-220 µm, median particle width D₅₀ = 200 µm, mixture of beech and birch, aspect ratio = 3, true particle density = 0.6 - 0.7 g/cm³ |
| **FW2** | Hard wood particles, particle size width 370-490 µm, median particle width D₅₀ = 430 µm, mixture of beech and birch, aspect ratio = 3, true particle density = 0.6 - 0.7 g/cm³ |

### Preparation of mixtures and determination of ideal mixing ratios

The damping material compositions with the weight ratio of the solid particulate cellulose-contain filler **FW** (sum of **FW1** and **FW2)** and the bitumen **B** as shown in Figure 1 were prepared according to the following procedure.

In a first step, the solid particulate cellulose-contain filler **FW1** and **FW2 (FW1** and **FW2** always in a 1:1 weight ratio) and the bitumen **B** were mixed in a laboratory kneader-mixer (double Z shape blade) at 160°C and 40 rpm for 30 min in the weight ratio indicated in Figure 1. For example, the composition shown in table 1 with a density of approximately 1.1 g/cm³ and an amount of 80 wt.-% of solid particulate cellulose-contain filler **FW** has a weight ratio of solid particulate cellulose-contain filler **FW** to bitumen **B ((FW1 + FW2) / B)** of 4 : 1. Then, the densities of the compositions were measured according to DIN EN ISO 1183 standard using a water immersion method (Archimedes principle) in deionized water and a precision balance to measure the mass of the compositions.

It can be seen from figure 1 that at a ratio of 4 : 1 to about 4 : 6, the mixed compositions have a density of approximately 1.1 g/cm³. This is an indication that the solid particulate cellulose-contain filler **FW** is fully saturated and wetted with the bitumen **B.**

In figure 2, the above-mentioned mixed compositions were also tested for water uptake by determining their water absorption after 24h storage at 30° C and a relative humidity of 85% by weighting the compositions before and after with a precision balance. The results obtained correlate with the findings of the density determination of figure 1.

### Preparation of mixtures and determination of ideal mixing times

In order to determine the ideal mixing time of the solid particulate cellulose-contain filler **FW** with the bitumen **B,** a composition with an amount of 80 wt.-% of solid particulate cellulose-contain filler **FW** (mixture of **FW1** and **FW2** in a 1:1 weight ratio) that has a weight ratio of solid particulate cellulose-contain filler **FW** to bitumen **B ((FW1 + FW2) / B)** of 4 : 1 was chosen and mixed in a laboratory kneader (double Z) at 160°C and 40 rpm for the time in minutes as indicated in Figure 3. Every 5 min after starting the mixing process, a sample of the composition was taken, and its density was analyzed as described above. As can be seen from the data from figure 3, the maximum density of approximately 1.1 g/cm³ is reached after approximately 20 min of mixing.

In parallel, every 5 min after starting the mixing process, a sample of the composition was taken, and its loss factor was analyzed as shown in figure 4. Each taken sample was processed into sheets having a thickness of ca. 2 mm and mass per unit area of ca. 3 kg/m² by using a conventional calendering apparatus. Test specimens having suitable dimensions were obtained from the prepared sheets of said compositions by cutting. One of the major surfaces of each test specimen was coated with a layer of pressure sensitive acrylate-based adhesive. The adhesive layer had a thickness of 50 µm.

The loss factors for the test specimen were determined by using the measurement method as defined in ISO 6721 standard. The measurements were conducted using a commercially available loss factor tester at a temperature in the range of from 20 to 60 °C. The values of the loss factor at the frequency of 200 Hz were obtained from the measured values of the loss factor value by mathematical means.

As can be seen from the data from figure 4, there is a significant decrease of acoustic effectiveness after a mixing time of more than 35 minutes.

## Claims

1. A method of mixing:
- at least one bitumen component **B and**
- at least one solid particulate cellulose-containing filler **FW,** for a mixing time of ≥ 10 min at a mixing temperature of 100 - 180 °C,
wherein the weight ratio of solid particulate cellulose-contain filler **FW** to bitumen **B (FW / B)** is between 6 : 1 and 1 : 1, preferably 5 : 1 and 3 : 1.

2. The method according to claim 1, wherein the weight ratio of the at least one solid particulate cellulose-contain filler **FW** to bitumen **B (FW / B)** is between 5 : 1 and 3 : 1, preferably 4.5 : 1 and 3.5 : 1.

3. The method according to any preceding claims, wherein the mixing temperature is between 130 - 175 °C, preferably 145 - 175 °C, more preferably 155 - 165 °C.

4. The method according to any preceding claims, wherein the mixing time is between 10 - 45 min, preferably 15 - 40 min, more preferably 20 - 35 min.

5. The method according to any preceding claims, wherein the mixing is conducted as a batch process, preferably using batch-type mixer, more preferably selected from the list consisting of planetary mixer and kneading mixer, preferably kneading mixer.

6. The method according to claim 5, wherein the mixing is conducted with a kneading mixer, preferably a double arm kneading mixer, with a mixing rate of 25 - 60 rounds per minute, preferably 30 - 50 rounds per minute.

7. The method according to any preceding claims, wherein the at least one solid particulate cellulose-containing filler **FW** has an aspect ratio of not more than 7.5, preferably not more than 5.0, wherein the aspect ratio is determined as the ratio of the length (L) and thickness (T) of a particle.

8. The method according to any preceding claims, wherein the at least one solid particulate cellulose-containing filler **FW** is composed of wood particles, preferably comprising at least 75 wt.-%, more preferably at least 95 wt.-%, of hardwood particles.

9. The method according to any preceding claims, wherein the at least one solid particulate cellulose-containing filler **FW** has a median particle width Dso in the range of 100 - 1000 µm, preferably 115 - 850 µm, more preferably 150 - 500 µm.

10. The method according to any preceding claims, wherein the bitumen component **B** has a needle penetration, determined according to DIN EN 1426:2015, of 50 - 70 or 70 - 100, preferably 70 - 100 and/or a softening point, determined according to DIN EN 1427:2015, of 43 - 54 °C, preferably 43 - 51 °C.

11. The method according to any preceding claims, wherein the obtained mixture is cooled to a temperature below 35 °C, preferably below 30 °C, and preferably stored, more preferably stored for longer than 1 week, at said temperature.

12. The method according to any preceding claims, wherein the mixture contains less than 10 weight-%, preferably less than 5 weight-%, more preferably less than 2 weight-%, based on the total weight of the mixture obtained in the method, of components other than the at least one bitumen component **B** and the at least one solid particulate cellulose-containing filler **FW** and optionally at least one solid particulate mineral filler **FM,** more preferably of components other than the at least one bitumen component **B** and the at least one solid particulate cellulose-containing filler **FW.**

13. The method according to any preceding claims, wherein, after the mixing, preferably after an additional storage period after the mixing,
- at least one thermoplastic polymer **TP,**
- optionally at least one bitumen component **B1,**
- optionally at least one hydrocarbon resin **HR,**
- optionally at least one wax **W,**
- optionally at least one plasticizer **PL,** and
- optionally at least one solid particulate mineral filler **FM,**
is added to the mixture of the at least one bitumen component **B** and the at least one solid particulate cellulose-containing filler **FW** to obtain an acoustic damping material.

14. The method according to claim 13, wherein the amount of the mixture of the at least one bitumen component **B** and the at least one solid particulate cellulose-containing filler **FW** is 1 - 30 wt.-%, preferably 3 - 25 wt.-%, more preferably 5 - 20 wt.-%, based on the total weight of the acoustic damping material.

15. Use of the mixture obtained by the method of any one of claims 1-14 for the production of acoustic damping material, preferably for the damping of vibrations and/or noise in transportation vehicles or white goods.

16. A vibration and noise damping element (1) comprising:
i) A damping layer (2) having a first surface (3) and a second surface (3') and
ii) An adhesive layer (4) covering at least a portion of the first surface (3) of the damping layer (2), wherein the damping layer (2) comprises the mixture of the at least one bitumen component **B** and the at least one solid particulate cellulose-containing filler **FW** obtained in the method according to any one of claims 1-14.

17. A method for applying a vibration and noise damping element (1) according to claim 16 to a noise emitting surface (7) of a substrate (6), the method comprising steps of:
I) Providing the vibration and noise damping element (1) according to claim 16,
II) Contacting the outer major surface of the adhesive layer (4) with the noise emitting surface (7) and applying sufficient pressure to form an adhesive bond or
II') Heating the adhesive layer (4) and/or the substrate (6) and contacting the outer major surface of the adhesive layer (4) with the noise emitting surface (7) and forming an adhesive bond by cooling of the adhesive layer (4).
